# EUROPEAN PATENT APPLICATION

(11) **EP 4 725 794 A1**
(43) Date of publication of application: **15.04.2026**
(21) Application number: 25207249.1
(22) Date of filing: 07.10.2025
(51) Int. Cl.: B62B 7/06

(54) **A HINGE ASSEMBLY FOR A PUSHCHAIR**

(30) Priority: 09.10.2024 GB 202414853
(71) Applicant: Mamas & Papas (Holdings) Limited, West Yorkshire, HD5 0RH (GB)
(72) Inventor: HARGREAVES, Nichola, Leanne, Huddersfield, HD5 0RH (GB); HARRIS, Matthew, Allen, Huddersfield, HD5 0RH (GB)
(74) Representative: Haseltine Lake Kempner LLP

(57) **Abstract**

A pushchair hinge assembly (300) comprising: a hinge body (310); a first leg member (320) coupled to the hinge body; a handle member (324); a second leg member (322), wherein the handle member and second leg member are pivotally coupled to the hinge body at respective pivot axes; wherein the assembly further comprises a locking part (330) movable relative to the handle member and the second leg member between a locking position, in which portions of the locking part engage the handle member and the second leg member to prevent rotation of the handle member and second leg member relative to the first leg member; and an unlocked position, in which the portions of the locking part do not engage the handle member and the second leg member, wherein the hinge assembly further comprises an actuator part (340) and a lock button (350). A pushchair frame comprising the pushchair hinge assembly is also provided.

## Description

### Technical Field

The present disclosure relates to a hinge assembly for a pushchair, and is particularly, although not exclusively, concerned with a hinge assembly for a pushchair with improved ease of use.

### Background

Pushchairs often include one or more hinges and/or mechanical linkages/mechanisms for enabling the frame of the pushchair to be folded into a more compact shape when transporting or storing the pushchair.

It is desirable for the frame members of the pushchair to be securable in their folded positions when the pushchair is folded. It is further desirable for the securing mechanisms to be easy for a user to apply and release, so that the user can easily control whether the frame members are secured in their folded positions or are free to be unfolded.

### Statements of Invention

According to an aspect of the present disclosure, there is provided a pushchair hinge assembly comprising: a hinge body; a first leg member coupled, e.g. fixedly coupled, to the hinge body; a handle member; a second leg member, wherein the handle member and second leg member are pivotally coupled to the hinge body at respective pivot axes; wherein the hinge body comprises a housing having a wall defining an interior space, wherein the assembly further comprises a locking part disposed within the interior space, wherein the locking part is movable within the interior space relative to the handle member and the second leg member, e.g. in a direction parallel with the pivot axes of the handle and second leg, between a locking position, in which portions of the locking part engage the handle member and the second leg member to prevent rotation of the handle member and second leg member relative to the first leg member; and an unlocked position, in which the portions of the locking part do not engage the handle member and the second leg member, wherein the hinge assembly further comprises an actuator part extending at least partially between the locking part and the exterior wall of the hinge body, wherein the hinge body comprises a lock button arranged at an opening or gap in the housing wall, wherein the lock button and actuator part are configured such that depressing the lock button causes the actuator part to move, e.g. in a direction perpendicular to the direction in which the locking part moves, to engage the locking part and urge the locking part to move into the unlocked position.

According to another aspect of the present disclosure, there is provided a pushchair hinge assembly comprising: a hinge body; a first leg member coupled, e.g. fixedly coupled, to the hinge body; a handle member; a second leg member, wherein the handle member and second leg member are pivotally coupled to the hinge body at respective pivot axes; wherein the assembly further comprises a locking movable relative to the handle member and the second leg member, e.g. in a direction parallel with the pivot axes of the handle and second leg, between a locking position, in which portions of the locking part engage the handle member and the second leg member to prevent rotation of the handle member and second leg member relative to the first leg member; and an unlocked position, in which the portions of the locking part do not engage the handle member and the second leg member, wherein the hinge assembly further comprises an actuator part and a lock button, wherein the lock button and actuator part are configured such that depressing the lock button causes the actuator part to move, e.g. in a direction perpendicular to the direction in which the locking part moves, to engage the locking part and urge the locking part to move into the unlocked position.

The lock button may be a portion of the actuator part, e.g. formed at an end of the actuator part. Alternatively, the lock button may be a separate component from the actuator part and may engage the actuator part and urge the actuator part to move, e.g. towards the locking part, when the lock button is depressed.

The hinge body may comprise a housing having a wall defining an interior space. The locking part may be disposed within the interior space. The locking part may be movable within the interior space between the locking and unlocked positions. The actuator part may extend at least partially between the locking part and the exterior wall of the hinge body. The lock button may be arranged at an opening or gap in the housing wall.

The second leg member and handle member may be pivotable about the respective pivot axes into a folded configuration, in which the second leg member and handle extend from the hinge body in substantially the same direction as the first leg member.

The lock button may be arranged at the opening or gap in the housing wall substantially opposite a position on the hinge body from which the first leg member extends.

The locking part may comprise a ramp face. The actuator part may comprise a complementary ramp face configured to engage the ramp face to urge the locking part to move when the lock button is depressed.

The locking part may comprise a recess. The complementary ramp surface may be formed inside the recess. The actuator part may extend into the recess to engage the locking part, e.g. at the complementary ramp surface.

The locking part may comprise an elongate body portion extending between a first end and a second end. The locking part may be engageable with the handle at the first end and with the second leg at the second end. The elongate direction of the locking part is perpendicular to the direction in which the locking part moves. The recess may be formed in the elongate body portion. A thickness of the elongate body part may be locally increased in an area of the recess, e.g. in the direction in which the locking part moves.

The locking part may comprise a first pin portion formed at the first end for engaging the handle. The locking part may further comprise a second pin portion formed at the second end for engaging the second leg member.

The locking part may be supported for movement on the hinge body so that the locking part is not movable to engage only one of the handle and the second leg. For example, the locking part may be supported such that rotations of the locking part e.g. in directions perpendicular to the movement direction of the locking part, are restricted.

The hinge body may comprise one or more interior walls within the interior space, the interior walls forming a channel through which the locking part moves.

The actuator part may be configured to pass through an opening in the interior wall to engage the locking part.

A cross-sectional shape of the channel may be substantially the same as the cross-sectional shape of the locking part, e.g. in a direction perpendicular to the direction in which the locking part moves.

The handle member may comprise a pair of spaced apart plates. The handle member may be pivotally coupled to the hinge body by the pair of spaced apart plates. wherein the locking part is engageable with one of the spaced apart plates. One of the spaced apart plates may comprise an opening for receiving one of the pins formed on the locking part.

The second leg member may comprise a plate part, e.g. at a proximal end of the second leg member. The second leg may be pivotally coupled to the hinge body by the plate part. The locking part may be engageable with one of the plate part. For example, the plate part may comprise an opening for receiving one of the pins formed on the locking part.

A pushchair frame may comprise the above-mentioned pushchair hinge assembly. The pushchair hinge assembly may be disposed on one of the left and right sides of the pushchair, e.g. for hingedly connecting a handle frame member, first leg frame member and second leg frame member of the pushchair frame on the one of the left and right sides.

The pushchair frame may further comprise a non-locking hinge assembly disposed on the other of the left and right sides of the pushchair, e.g. for hingedly connecting the handle, first leg and second leg of the push chair on the other of the sides.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, features described in relation to the first mentioned aspect may be combined with the features of the second mentioned aspect.

### Brief Description of the Drawings

For a better understanding of the present invention, and to show more clearly how it may be carried into effect, reference will now be made, by way of example, to the accompanying drawings, in which:
Figure 1 is a front perspective view of a pushchair, according to arrangements of the present disclosure, in a deployed configuration;
Figure 2 is a front perspective view of the pushchair in a folder configuration;
Figure 3 is a side perspective view of a pushchair hinge, according to the present disclosure, for the pushchair hinge shown in Figure 1 and 2, in a folded configuration;
Figure 4 is a side perspective view of the pushchair hinge with members of the hinge between the folded configuration and a deployed configuration;
Figure 5 is a front perspective cross-sectional view of the pushchair hinge with members of the hinge in the deployed configuration; and
Figure 6 is a front perspective cross-sectional view of the pushchair hinge with members of the hinge in the folded configuration.

### Detailed Description

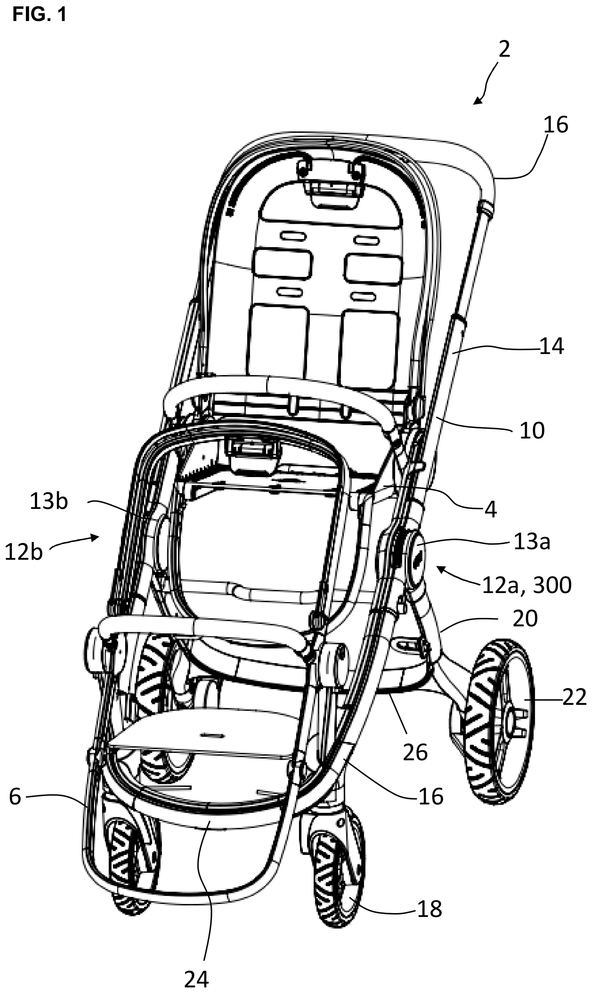

With reference to Figure 1, a pushchair 2 according to arrangements of the present disclosure comprises a pushchair frame 10 and one or more seats 4, 6, e.g. one or more reclining seats, for a child to sit or lie on, which are supported on the pushchair frame 10. In other arrangements, another type of attachment for a child to sit or lie on, such as a carrycot or car seat, may be supported on the pushchair frame 10 instead of either or both of the seats 4, 6. The term "seat" is used throughout this disclosure to refer to any attachment that can be supported on the pushchair frame 10 for a child to sit or lie on.

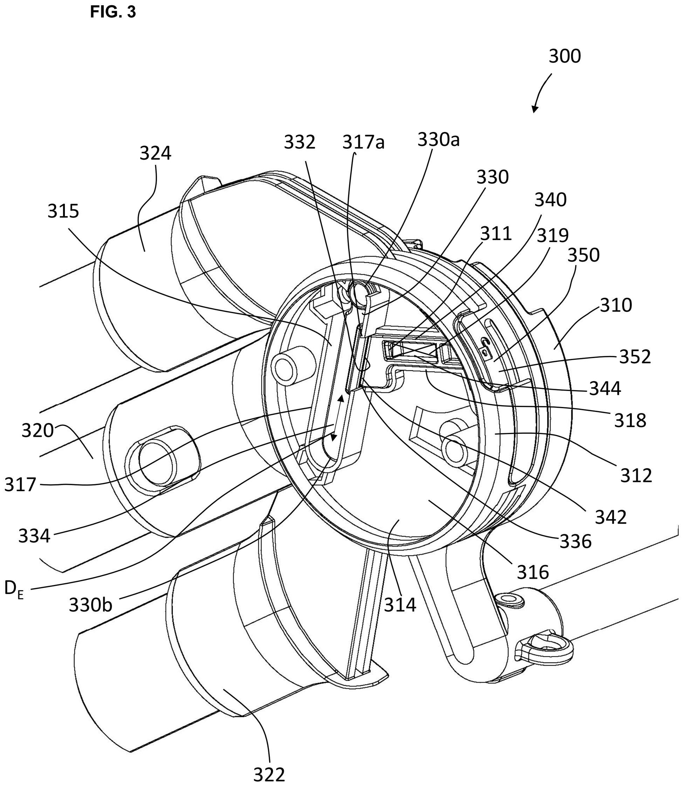

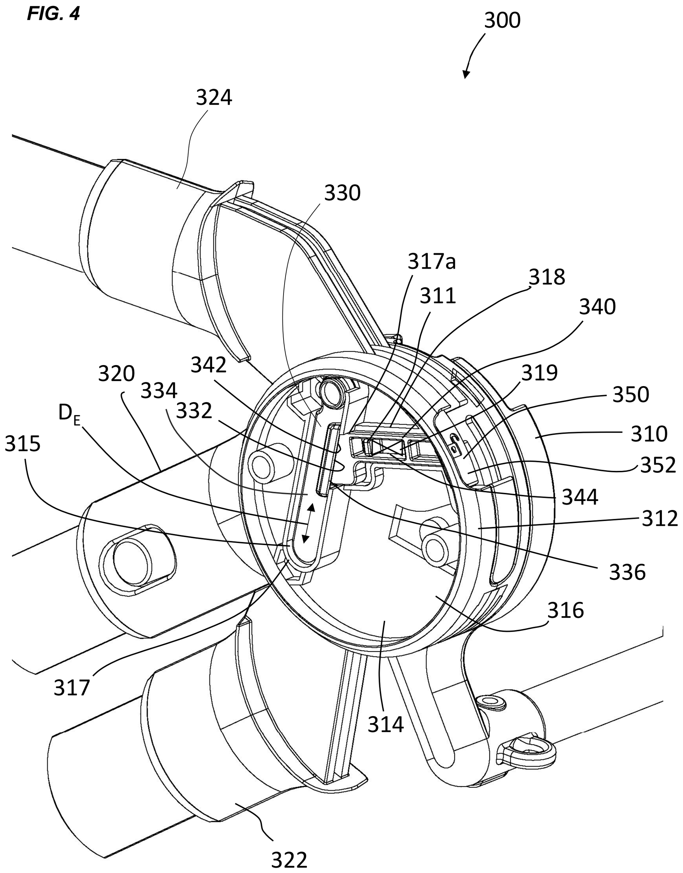

The pushchair frame 10 comprises a first pushchair hinge assembly 12a provided on a left side of the pushchair frame and a second pushchair hinge assembly 12b provided on a right side of the pushchair frame. Either or both of the first and second pushchair hinge assemblies 12a, 12b may comprise a pushchair hinge assembly 300 according to the present disclosure and described with reference to Figures 3 and 4 below. In particular, the hinge assembly 12a may comprise the pushchair hinge assembly 300.

In the description below, features of the pushchair frame 10, and in particular, frame members of the pushchair frame and their connections with the pushchair hinge assembly 12a on one lateral side of the pushchair frame are described. However, it will be appreciated that the pushchair frame 10 may be symmetrical between left and right, lateral sides of the pushchair frame, and hence, a similar arrangement of components, such as frame members, may be provided on both lateral sides of the pushchair frame.

The pushchair frame 10 further comprises a handle frame member 14 extending from the pushchair hinge assembly 12a and a handlebar 15 extending between the distal end of the handle frame member 14 and the distal end of another handle frame member provided on the other lateral side of the pushchair frame. The handlebar may be for a user to grip and push the pushchair. In other arrangements, the pushchair frame 10 may not comprise the handlebar extending between the handle frame members 14 and may instead comprise a handle, e.g. a separate handle, coupled to the handle frame member 14, e.g. on either side of the pushchair frame, for the user to grip when pushing the pushchair.

The pushchair frame 10 further comprises a first leg frame member, e.g. a front leg frame member 16, extending from the pushchair hinge assembly 12a for supporting one or more front wheels 18 of the pushchair, and a second leg frame member, e.g. a rear leg frame member 20, extending from the pushchair hinge assembly 12a for supporting one or more rear wheels 22 of the pushchair.

The pushchair frame 10 may comprise a front lateral frame member 24 extending laterally between distal ends of the front leg frame members 16 provided on either lateral side of the pushchair frame. As illustrated, the front lateral frame member 24 may be arcuate. In some arrangements, the front lateral frame member 24 may be integrally formed with one or both of the front leg frame members 16. In such arrangements, a single frame member may extend from the pushchair hinge assembly 12a on one side of the pushchair frame to one of the front wheels 18, laterally across to the other of the front wheels 18, and from the other of the front wheels to the pushchair hinge assembly 12b on the other side of the pushchair frame.

Similarly, the pushchair frame may comprise a rear lateral frame member 26 extending laterally between distal ends of the rear leg frame members 20. In some arrangements, the rear lateral frame member 26 may be integrally formed with one or both of the rear leg frame members 20. In such arrangements, a single frame member may extend from the pushchair hinge assembly 12a on one side of the pushchair frame to one of the rear wheels 22, laterally across to the other of the rear wheels 22, and from the other of the rear wheels to the pushchair hinge assembly 12b on the other side of the pushchair frame.

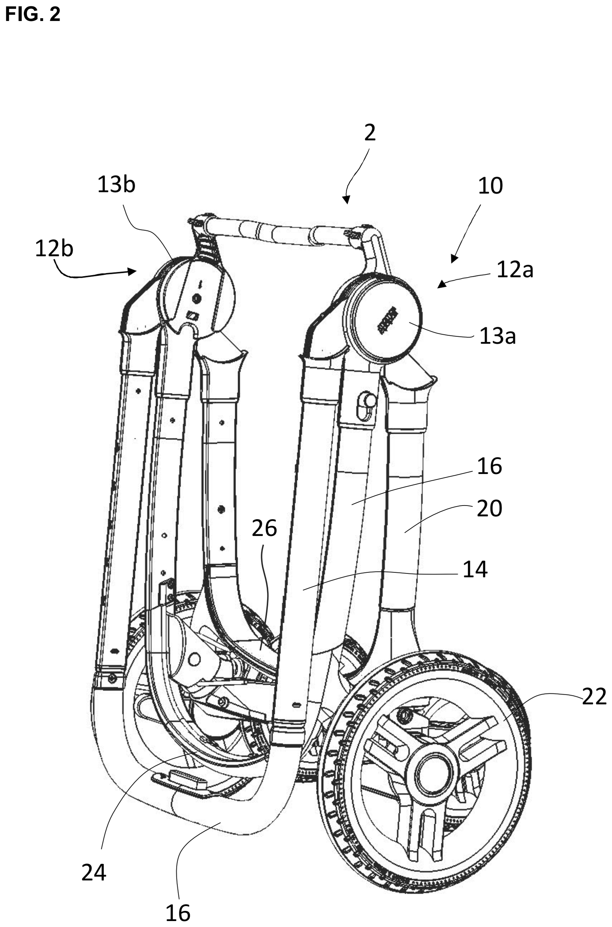

The pushchair frame 10 is configured to fold into a folded configuration, illustrated in Figure 2, in which the handle frame members 14, front leg frame members 16, and rear leg frame members 20 extend from the pushchair hinge assemblies in substantially the same directions as one another or in directions substantially parallel with one another. The pushchair hinge assemblies 12a, 12b may be configured to facilitate pivoting of the front leg frame members 16, rear leg frame members 20 and handle frame members 14 relative to one another between the deployed configuration, depicted in Figure 1, and the folded configuration, depicted in Figure 2.

As depicted in Figure 2, when the pushchair frame 10 is in the folded configuration, the pushchair frame may be stood upright on the rear and/or front wheels 18, 22, and the handlebar 15.

The pushchair hinge assemblies 12a, 12b may comprise a hinge body 13a, 13b. One of the front and rear leg frame members 16, 20 may be coupled, e.g. fixedly coupled, to the hinge body 13a, 13b of the pushchair hinge assembly. For example, in the arrangement shown in Figures 1 and 2, the front leg frame member 16 is fixedly coupled to the hinge body 13a. The other of the front and rear leg frame members 16, 20 may be pivotally coupled to the hinge body, 13a,13b. Further, the handle frame members 14 may be pivotally coupled to the hinge body 13a, 13b, e.g. on either lateral side of the pushchair frame. The other of the front and rear leg frame members, and the handle frame members may be coupled to the hinge body 13a, 13b at different respective pivot axes.

With reference to Figures 3 and 4, a pushchair hinge assembly 300 according to arrangements of the present disclosure will now be described. The pushchair hinge assembly 300 may be provided in place of either or both of the pushchair hinge assemblies 12a, 12b of the pushchair frame 10 described above.

When provided as part of the pushchair frame 10, the pushchair hinge assembly 300 is configured to enable the relative positions of the front leg frame members 16, rear leg frame member 20 and handle member 14 to become locked when the pushchair frame 10 is in the folded configuration. The pushchair hinge assembly 300 may be configured such that the relative positions of the front leg frame member 16, rear leg frame member 20 and handle member 14 become locked automatically when the frame members, e.g. all of the frame members, are moved into the folded configuration. The pushchair hinge assembly 300 is further configured to enable the relative positions of the front leg frame member 16, rear leg frame member 20 and handle member 14 to be unlocked through an action, e.g. a single action, by a user of the pushchair.

The pushchair hinge assembly 300 comprises a hinge body 310. The hinge body 310 may comprise a housing and comprises an exterior wall 312 at least partially defining an interior space 314 of the housing. As illustrated, the hinge body 310 may be substantially prism shaped, e.g. cylindrical, having a longitudinal axis. The exterior wall 312 may have a tubular shape, e.g. a cylindrical tube shape. The hinge body 310 may comprise axial end plates 316 for closing the interior space 314 of the hinge body at axial ends of the interior space 314. The axial end plates may be provided at axial ends of the exterior wall 312 or at positions along the exterior wall spaced apart from one another in an axial direction of the exterior wall. As depicted, one of the axial end plates may be integrally formed with the exterior wall 312, and the other of the axial end plate (not shown in Figures 3 and 4) may be removably couplable to the hinge body. In other arrangements, the hinge body 310 and the housing defined by the hinge body may have any other desirable shape.

A first leg member 320 of the hinge assembly, such as a front leg member, may be coupled, e.g. fixedly coupled to the hinge body 310. The first leg member 320 may be to couple to a first leg frame member of the pushchair fame, such as the front leg frame member 16 of the pushchair frame 10 described above. In alternative arrangements, the first leg frame member of the pushchair frame may be integrally formed within the first leg member of the hinge assembly. In other words, the first leg member may be the first leg frame member.

The hinge assembly 300 further comprises a second leg member 322 and a handle member 324. The second leg member 322 is to couple to a second leg frame member of the pushchair frame, such as the rear leg frame member 20 of the pushchair frame 10 described above. In alternative arrangements, the second leg frame member may be integrally formed within the second leg member of the hinge assembly. In other words, the second leg member 322 may be the second leg frame member 20 of the pushchair frame. Similarly, the handle member 324 may be to couple to a handle frame member of a pushchair frame, such as the handle frame member 14 of the pushchair frame 10. In alternative arrangements, the handle frame member 14 may be integrally formed with the handle member of the hinge assembly. In other words, the handle member 324 may be the handle frame member 14 of the pushchair frame.

The second leg member 322 and the handle member 324 are pivotally coupled to the hinge body 310 at respective pivot axes A_{L}, A_{H}. In particular, the second leg member may be pivotally coupled to the hinge body 310 at a leg pivot axis A_{L} and the handle member may be pivotally coupled to the hinge body at a handle pivot axis A_{H}. The leg pivot axis and the handle pivot axis may be parallel with one another. For example, The leg pivot axis and the handle pivot axis may be parallel with the longitudinal axis of the hinge body. The leg pivot axis and the handle pivot axis may be spaced apart from one another. In particular, the leg pivot axis and the handle pivot axis may be spaced apart from one another in a direction perpendicular to a direction in which the first leg member, or first leg frame member extends, e.g. principally extends, from the hinge body. The second leg member and the handle member are thereby pivotable relative to one another and the first leg member between the folded configuration, depicted in Figures 2 and 3, and the deployed configuration, depicted in Figure 1.

The hinge assembly 300 further comprises a locking part 330 configured to lock, e.g. automatically lock, the relative positions of the first leg member 320, second leg member 322 and the handle member 324, when the first leg member, second leg member and handle member are in the folded configuration.

As illustrated, the locking part 330 is disposed within the interior space 314 of the hinge body. The locking part 330 is movable within the interior space relative to the second leg member 322 and the handle member 324. In particular, the locking part 330 may be movable in a direction parallel with the pivot axes of the second leg member and the handle member, e.g. the leg pivot axis A_{L} and the handle pivot axis A_{H}. Accordingly, the locking part 330 may be movable in the axial direction of the hinge body. The locking part 330 is movable between a locking position, in which portions of the locking part engage the second leg member and the handle member, e.g. in order to prevent or restrict movement of the second leg member and the handle member relative to the first leg member, and an unlocked position in which the portion of the locking part does not engage the second leg member and the handle member.

The locking part 330 may be positionable in the locking position when the second leg member 322 and the handle member 324 are in the folded configuration. The locking part 330 may not be positionable in the locking position when either of the second leg member and handle member is not in the folded configuration.

As described in greater detail below, the locking part 330 is provided within the hinge body 310, e.g. the interior space, such that an angular position of the locking part, e.g. about an axis parallel with the pivot axes A_{L}, A_{H} of the second leg member and the handle member, is fixed relative to the hinge body 310.

As mentioned above, the second leg member 322 and the handle member 324 are pivotable relative to one another and the first leg member 320 between the folded configuration and the deployed configuration. When the locking part 330 is in the locking position, the second leg member 322 and the handle member 324 may be prevented from moving out of the folded configuration.

The hinge assembly 300 further comprises an actuator part 340. The actuator part 340 extends at least partially between the locking part 330 and the exterior wall 312 of the housing.

The hinge assembly 300 further comprises a lock button 350 provided at the exterior wall 312. The lock button 350 may be provided in an opening or gap in the exterior wall, so that the user of the pushchair comprising the hinge assembly 300 can press on a pressing surface 352 of the lock button, in order to depress the lock button 350 relative to the exterior wall 312 of the hinge assembly. In an undepressed position of the lock button 350, the pressing surface 352 may protrude beyond the exterior wall 312 of the housing, e.g. outside the interior 314 of the housing, or may be flush or under flush with an outer surface of the exterior wall of the housing. As illustrated, the lock button 350 may be arranged at the opening or gap in the exterior wall that is substantially opposite a position a position on the hinge body 310 from which the first leg member 320 extends. Hence, as illustrated in Figure 2, when the pushchair comprising the hinge assembly 300 is in the folded configuration and is stood upright on the wheels and handle, then the pressing surface 352 of the lock button 350 may face upward so as to be easily accessible to a user.

The lock button 350 and actuator part 340 may be configured such that depressing the lock button 350, e.g. relative to the exterior wall 312, causes the actuator part 340 to move towards the locking part 330. In the arrangement shown, the lock button 350 and the actuator part 340 are integrally formed. For example, the lock button 350 may be formed at an end of the actuator part 340, e.g. as a portion of the actuator part. In other arrangements, the lock button 350 may be a separate component from the actuator part 340. In such arrangements, depressing the lock button 350, e.g. relative to the exterior wall 312, may cause the lock button to engage the actuator part 340 and urge the actuator part 340 to move towards the locking part 330.

As shown, the hinge body 310 may comprise one or more actuator part guide walls 318 arranged inside interior space 314 for guiding the movement of the actuator part 340, For example, the actuator part guide walls 318 may comprise a pair of spaced apart walls configured to guide sliding movement of the actuator part arranged between the walls. The actuator part 340 may be configured move towards the locking part 330 in a direction at an angle, e.g. perpendicular, to the direction in which the locking part moves between the locking and unlocked positions. When the actuator part 340 moves towards the locking part, the actuator part 340 may engage the locking part 330 and urge the locking part 330 to move towards the unlocked position.

In the arrangement shown in the Figures, the actuator part 340 comprises a ramp surface 342 and the locking part comprises a complementary ramp surface 332 configured to engage the ramp surface 342 of the actuator part. The locking part 330 is urged to move towards the unlocked position due to the engagement between the angled ramp surfaces.

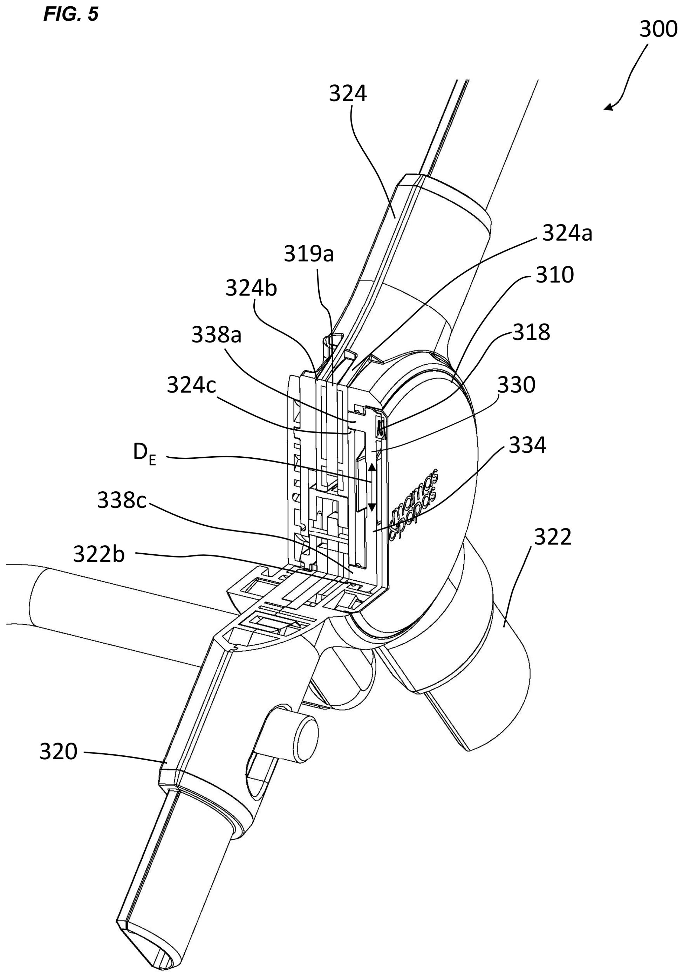

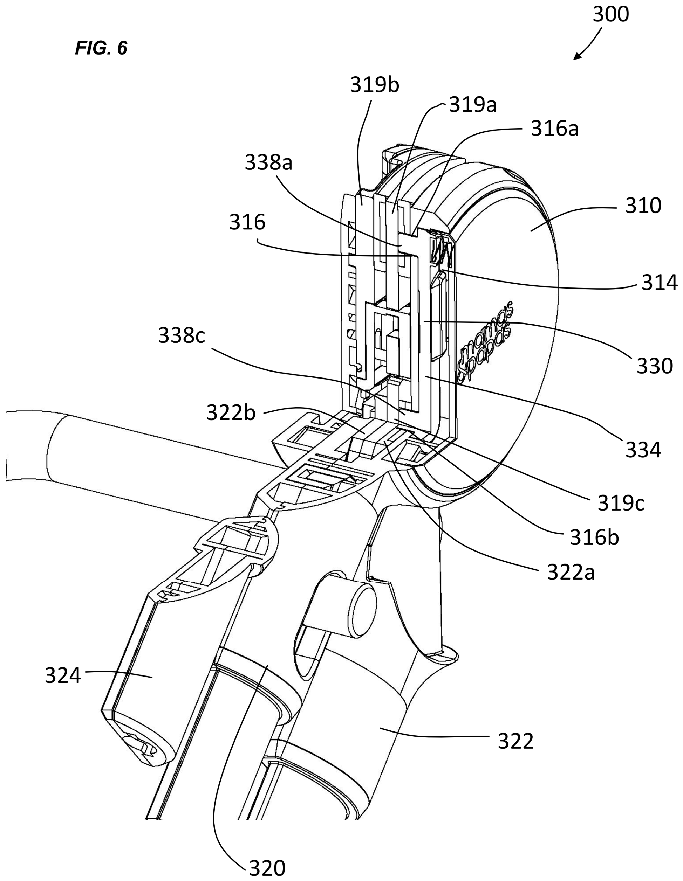

Referring to Figures 3 and 4 in addition to Figure 5 and 6, the locking part 330 may comprise an elongate body portion 334 extending between first and second ends 330a, 330b of the locking part in an elongation direction D_{E}. The elongation direction may be perpendicular to the direction in which the locking part moves between the locking and unlocked positions. The complementary ramp surface 332 may be formed on the elongate body portion 334 of the locking part.

As depicted, the locking part 330 may comprise a recess 336. The recess may be open on two sides of the recess. The actuator part 340 may extend into the recess, e.g. through one of the open sides. The actuator part may engage the locking part 330 inside the recess. The complementary ramp surface 332 may be formed inside the recess, e.g. as a wall of the recess. In some arrangements, a thickness of the body portion 334 of the locking part may be greater locally in the area of the recess 336.

In other arrangements, the actuator part 340 and locking part 330 may be configured to cause the movement of the locking part in any other way when the lock button 350 is depressed. Referring briefly to Figures 5 and 6, the locking part 330 may be biased towards the locking position. The hinge assembly 300 may comprise a resilient member 318, such as a coil spring, arranged to bias the locking part 330 into the locking position. Additionally or alternatively, the actuator part 340 may be biased into a position in which the actuator part 340 does not urge the locking part 330 into the unlocked position. For example, the hinge assembly may comprise a resilient member 319, such as a coil spring configured to bias the actuator part 340 away from the locking part 330. The actuator part 340 may be biased into a position in which the lock button is in a least depressed position of the lock button relative to the exterior wall 312, e.g. such that the lock button protrudes beyond the exterior wall. As illustrated in Figures 3 and 4, the actuator part 340 may comprise an opening 344 and a post 311 may be formed on the hinge body 310 which is arranged within the opening 344. The resilient member 319 may be arranged within the opening 344 between the post 311 and a wall of the opening 344, in order to bias the position of the actuator part 340 relative to the hinge body and/or the locking part.

The locking part 330 may comprise a first pin portion 338a formed at the first end 330a and a second pin portion 338b formed at the second end 330b. The first and second pin portions may extend from the body portion 334 in a direction perpendicular to the elongation direction D_{E}. In particular, the first and second pin portions 338a, 338b may extend from the body portion 334 in the direction in which the locking part moves from the unlocked position to the locking position. In the arrangement depicted, the pin portions 338a, 338b are substantially cylindrical. However, in other arrangements, the pin portions may be any other shape.

The first pin portion 338a is configured such that, when the handle member is in the folded configuration, the first pin portion 338a is aligned, e.g. substantially completely aligned, with an opening 324c formed in the handle member. Similarly, the second pin portion 338b is configured such that, when the second leg member is in the folded configuration, the second pin portion 338b is aligned, e.g. substantially completely aligned, with an opening 322c formed in the second leg member.

As mentioned above, the locking part 330 is biased towards the locking position, and hence, when the handle member 324 and the second leg member 322 are in the folded configuration, the locking member may move, by virtue of its bias, into the locking position in which the first pin portion 338a is received within the opening 324c formed in the handle member and the second pin portion 338b is received within the opening 322c formed in the second leg member, thereby locking, e.g. automatically locking, the positions of the handle member 324 and second leg member 322 about their respective pivot axes.

Referring in particular to Figure 6, the handle member 324 and second leg member 322, may be coupled to the hinge body on the opposite side of the axial end plate 316 from the interior 314 of the hinge body housing. The first pin portion 338a and the second pin portion 338b may extend through openings 316a, 316b formed in the axial end plate of the hinge body to reach the handle member 324 and second leg member 322.

As illustrated, the handle member 324 may comprise a pair of spaced apart plates 324a, 324b. The spaced apart plates 324a, 324b may be spaced apart in a direction parallel with the handle pivot axis A_{H}. The handle member 324 may be coupled to the hinge body 310 by the pair of plates 324a, 324b. As illustrated, a first inner plate 319a of the hinge body may be arranged between the pair of plate 324a, 324b. Further, an end portion 319b of the hinge body may be arranged on an opposite side of the pair of plates from the axial end plate 316. The handle member 324 may be coupled to the axial end plate 316, first inner plate 319a and/or end portion 319b at the handle pivot axis A_{H}. The opening 324c in the handle member for receiving the first pin portion 338a may be formed in one of the pair of plates 324a, 324b, e.g. the one of the pair of plates closest to the interior space.

Similarly, the second leg member 322 may comprise one or more plates, such as a pair of space apart plates 322a, 322b. The spaced apart plates 322a, 322b may be spaced apart from one another in a direction parallel to the leg pivot axis A_{L}. The second leg member 322 may be coupled to the hinge body 310 by the pair of plates 322a, 322b. As illustrated, a second inner plate 319c of the hinge body may be arranged between the pair of plate 322a, 322b. In some arrangements, the first and second inner plates 319a, 319c may be integrally formed. The end portion 319b of the hinge body may be arranged on an opposite side of the pair of plates 322a, 322b from the axial end plate 316. The second leg member 322 may be coupled to the axial end plate 316, second inner plate 319c and/or the end portion 319b at the leg pivot axis A_{L}. The opening 322c in the handle member for receiving the second pin portion 336 may be formed in one of the pair of plates 322a, 322b, e.g. the one of the pair of plates closest to the interior space.

Returning to Figures 3 and 4, the hinge body 310 may further comprise one or more interior walls 317 within the interior space of the housing. The interior walls may form a channel 315. The locking part 330 may be arranged within the channel and may move through the channel between the locking position and the unlocked position. The interior walls 317 may be configured to guide the movement of the locking part 330. A cross-sectional shape of the channel 315 formed by the interior walls 317 may be substantially the same as a cross-sectional shape of the locking part 330 in a plane perpendicular to the direction in which the locking part moves.

As depicted, the actuator part 340 may extend through an opening 317a in the interior wall to reach the locking part 330, e.g. in order to engage the locking part, as described above.

The interior walls 317 may be configured to prevent or restrict rotations of the locking part 330, e.g. about an axis parallel with the handle pivot axis A_{H} and the leg pivot axis A_{L}. In some arrangements, the interior walls 317 may be configured to at least partially prevent or restrict rotations of the locking part 330 about an axis perpendicular to the elongation direction D_{E} of the locking part, e.g. which rotations may otherwise enable the locking part to engage only one of the handle member and second leg member. Additionally or alternatively, widths of the ramp surface 342 and complementary ramp surface 332 formed on the actuator part and locking part respectively may prevent or restrict rotations of the locking part 330 about the axis perpendicular to the elongation direction.

The following additional statements of invention also form part of the present specification:
Statement 1. A pushchair hinge assembly comprising:
   a hinge body;
   a first leg member coupled to the hinge body;
   a handle member;
   a second leg member, wherein the handle member and second leg member are pivotally coupled to the hinge body at respective pivot axes;
   wherein the assembly further comprises a locking part movable relative to the handle member and the second leg member between a locking position, in which portions of the locking part engage the handle member and the second leg member to prevent rotation of the handle member and second leg member relative to the first leg member; and an unlocked position, in which the portions of the locking part do not engage the handle member and the second leg member, wherein the hinge assembly further comprises an actuator part and a lock button, wherein the lock button and actuator part are configured such that depressing the lock button causes the actuator part to move to engage the locking part and urge the locking part to move into the unlocked position.
Statement 2. The pushchair hinge assembly of statement 1, wherein the hinge body comprises a housing having a wall defining an interior space, wherein the locking part is disposed within the interior space, wherein the locking part is movable within the interior space between the locking and unlocked positions, wherein the actuator part extends at least partially between the locking part and the exterior wall of the hinge body, and wherein the lock button is arranged at an opening or gap in the housing wall.
Statement 3. The pushchair hinge assembly of statement 2, wherein the lock button is arranged at the opening or gap in the housing wall substantially opposite a position on the hinge body from which the first leg member extends.
Statement 4. The pushchair hinge assembly of any of statements 1 to 3, wherein the locking part comprises a ramp face and the actuator part comprises a complementary ramp face configured to engage the ramp face to urge the locking part to move when the lock button is depressed.
Statement 5. The pushchair hinge assembly of statement 4, wherein the locking part comprises a recess, wherein the complementary ramp surface is formed inside the recess.
Statement 6. The pushchair hinge assembly of any of the preceding statements, wherein the locking part comprises an elongate body portion extending between a first end and a second end.
Statement 7. The pushchair hinge assembly of statement 6, wherein the locking part is engageable with the handle at the first end and with the second leg at the second. end
Statement 8. The pushchair hinge assembly of statement 7, wherein the elongate direction of the locking part is perpendicular to the direction in which the locking part moves.
Statement 9. The pushchair hinge assembly of any of statements 6 to 8 and 5, wherein the recess is formed in the elongate body portion,
Statement 10. The pushchair hinge of statement 9, wherein a thickness of the elongate body part is locally increased in an area of the recess, e.g. in the direction in which the locking part moves.
Statement 11. The pushchair hinge assembly of any of statements 6 to 10, wherein the locking part comprises a first pin portion formed at the first end for engaging the handle and a second pin portion formed at the second end for engaging the second leg member.
Statement 12. The pushchair hinge assembly of any of the preceding statements, wherein the locking part is supported for movement on the hinge body so that the locking part is not movable to engage only one of the handle and the second leg.
Statement 13. The pushchair hinge assembly of any of the preceding statements, wherein the hinge body comprises one or more interior walls within the interior space, the interior walls forming a channel through which the locking part moves.
Statement 14. The pushchair hinge assembly of statement 13, wherein the actuator part passes through an opening in the interior wall to engage the locking part
Statement 15. The pushchair hinge assembly of statement 13 or 14, wherein a cross-sectional shape of the channel substantially the same as the cross-sectional shape of the locking part in a direction perpendicular to the direction in which the locking part moves.
Statement 16. The pushchair hinge assembly of any of the preceding statements, wherein the handle member comprises a pair of spaced apart plates, wherein the handle member is pivotally coupled to the hinge body by the pair of spaced apart plates, wherein the locking part is engageable with one of the spaced apart plates.
Statement 17. The pushchair hinge assembly of statement 16, wherein one of the spaced apart plates comprises an opening for receiving one of the pins formed on the locking part.
Statement 18. The pushchair hinge assembly of any of the preceding statements, wherein the second leg member comprises a plate part, wherein the second leg member is pivotally coupled to the hinge body by the plate part, wherein the locking part is engageable with the plate part.
Statement 19. The pushchair hinge assembly of statement 18, wherein the plate part comprises an opening for receiving one of the pins formed on the locking part.
Statement 20. A pushchair frame comprising:
   the pushchair hinge assembly of any of the preceding statements, wherein the pushchair hinge assembly is disposed on one of the left and right sides of the pushchair frame for hingedly connecting a handle frame member, first leg frame member and second leg frame member of the pushchair frame on the one of the left and right sides.
Statement 21. The pushchair frame of statement 20 further comprising:
   a non-locking hinge assembly disposed on the other of the left and right sides of the pushchair for hingedly connecting the handle, first leg and second leg of the push chair on the other of the sides.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A pushchair hinge assembly comprising:
a hinge body;
a first leg member coupled to the hinge body;
a handle member;
a second leg member, wherein the handle member and second leg member are pivotally coupled to the hinge body at respective pivot axes;
wherein the assembly further comprises a locking part movable relative to the handle member and the second leg member between a locking position, in which portions of the locking part engage the handle member and the second leg member to prevent rotation of the handle member and second leg member relative to the first leg member; and an unlocked position, in which the portions of the locking part do not engage the handle member and the second leg member, wherein the hinge assembly further comprises an actuator part and a lock button, wherein the lock button and actuator part are configured such that depressing the lock button causes the actuator part to move to engage the locking part and urge the locking part to move into the unlocked position.

2. The pushchair hinge assembly of claim 1, wherein the hinge body comprises a housing having a wall defining an interior space, wherein the locking part is disposed within the interior space, wherein the locking part is movable within the interior space between the locking and unlocked positions, wherein the actuator part extends at least partially between the locking part and the exterior wall of the hinge body, and wherein the lock button is arranged at an opening or gap in the housing wall, optionally wherein the lock button is arranged at the opening or gap in the housing wall substantially opposite a position on the hinge body from which the first leg member extends.

3. The pushchair hinge assembly of claims 1 or 2, wherein the locking part comprises a ramp face and the actuator part comprises a complementary ramp face configured to engage the ramp face to urge the locking part to move when the lock button is depressed.

4. The pushchair hinge assembly of claim 3, wherein the locking part comprises a recess, wherein the complementary ramp surface is formed inside the recess.

5. The pushchair hinge assembly of any of the preceding claims, wherein the locking part comprises an elongate body portion extending between a first end and a second end.

6. The pushchair hinge assembly of claim 5, wherein the locking part is engageable with the handle at the first end and with the second leg at the second end, optionally wherein the elongate direction of the locking part is perpendicular to the direction in which the locking part moves.

7. The pushchair hinge assembly of claim 5 or 6 and 4, wherein the recess is formed in the elongate body portion, optionally wherein a thickness of the elongate body part is locally increased in an area of the recess, e.g. in the direction in which the locking part moves.

8. The pushchair hinge assembly of any of claims 5 to 7, wherein the locking part comprises a first pin portion formed at the first end for engaging the handle and a second pin portion formed at the second end for engaging the second leg member.

9. The pushchair hinge assembly of any of the preceding claims, wherein the locking part is supported for movement on the hinge body so that the locking part is not movable to engage only one of the handle and the second leg.

10. The pushchair hinge assembly of any of the preceding claims, wherein the hinge body comprises one or more interior walls within the interior space, the interior walls forming a channel through which the locking part moves, optionally wherein the actuator part passes through an opening in the interior wall to engage the locking part

11. The pushchair hinge assembly of claim 10, wherein a cross-sectional shape of the channel substantially the same as the cross-sectional shape of the locking part in a direction perpendicular to the direction in which the locking part moves.

12. The pushchair hinge assembly of any of the preceding claims, wherein the handle member comprises a pair of spaced apart plates, wherein the handle member is pivotally coupled to the hinge body by the pair of spaced apart plates, wherein the locking part is engageable with one of the spaced apart plates, optionally wherein one of the spaced apart plates comprises an opening for receiving one of the pins formed on the locking part.

13. The pushchair hinge assembly of any of the preceding claims, wherein the second leg member comprises a plate part, wherein the second leg member is pivotally coupled to the hinge body by the plate part, wherein the locking part is engageable with the plate part, optionally wherein the plate part comprises an opening for receiving one of the pins formed on the locking part.

14. A pushchair frame comprising:
the pushchair hinge assembly of any of the preceding claims, wherein the pushchair hinge assembly is disposed on one of the left and right sides of the pushchair frame for hingedly connecting a handle frame member, first leg frame member and second leg frame member of the pushchair frame on the one of the left and right sides.

15. The pushchair frame of claim 14 further comprising:
a non-locking hinge assembly disposed on the other of the left and right sides of the pushchair for hingedly connecting the handle, first leg and second leg of the push chair on the other of the sides.
